Europäisches Patentamt

(19) European Patent Office

Office européen des brevets

(11) Numéro de publication: **0 004 979**
A2

(12) **DEMANDE DE BREVET EUROPEEN**

(21) Numéro de dépôt: **79101227.1**

(22) Date de dépôt: **23.04.79**

(51) Int. Cl.²: **H 02 G 3/20**

(30) Priorité: **24.04.78 BE 187040**
**08.03.79 BE 193909**

(43) Date de publication de la demande:
**31.10.79 Bulletin 79/22**

(84) Etats Contractants Désignés:
**CH DE FR GB IT LU NL SE**

(71) Demandeur: **Rutten, Victorine**
**Inakker 62**
**Zolder(BE)**

(72) Inventeur: **Rutten, Victorine**
**Inakker 62**
**Zolder(BE)**

(74) Mandataire: **Pirson, Jean et al,**
**c/o Bureau Gevers, S.A. rue de Livourne, 7 bte 1**
**B-1050 Brussels(BE)**

(54) **Boîte de connexion centrale universelle.**

(57) La boîte comprend un corps creux qui présente au moins un côté ouvert et un couvercle amovible s'adaptant à ce côté, tandis qu'il comprend sur sa paroi latérale au moins deux bras latéraux faisant saillie vers l'extérieur, qui sont situés en face l'un de l'autre et maintiennent le corps lors de son encastrement ou incorporation dans un plafond, bras à travers lesquels s'étend au moins un évidement débouchant dans le corps pour la mise en place de lignes électriques.

Fig. 1

0004979

## _1_
## "Boîte de connexion centrale universelle"

La présente invention est relative à une boîte de connexion pour plafond, en particulier destinée à la connexion d'un point lumineux et qui comporte un corps creux.

De telles boîtes de plafond sont utilisées aux endroits où un point lumineux doit être agencé dans un plafond. Cette boîte de plafond est incorporée dans le plafond et on y raccorde des lignes électriques qui sont formées par des fils électriques circulant dans des tubes.

Les boîtes de plafond connues de ce genre sont constituées par des boîtes cylindriques qui sont ouvertes à une extrémité et sont fixées dans le plafond avec leur face ouverte dirigée vers le bas. La fixation de cette boîte de dérivation dans le plafond offre de nombreux problèmes. De même, le raccordement des tubes des lignes électriques à la boîte entraîne quelquefois des problèmes. Dans de nombreux cas, ces tubes doivent faire des coudes relativement prononcés pour être disposés dans les ouvertures pratiquées dans la paroi de la boîte pour la pénétration des fils. Ceci est par exemple le cas avec des plafonds en béton pour lesquels, actuellement, les tubes avec les fils circulent sur le côté supérieur de la couche de béton, tandis que la boîte est située par définition avec son extrémité ouverte inférieure pratiquement dans le côté inférieur de la couche. Dans de tels cas, on prévoit en général cependant aussi des ouvertures dans la face supérieure de la boîte, de telle sorte qu'il est alors fort difficile d'encore fixer un crochet pour suspendre un appareil d'éclairage à la boîte.

0004979

Pour réduire quelque peu tous ces problèmes, différents genres et dimensions de boîtes de plafond sont prévus en fonction du genre et de l'épaisseur des plafonds.

L'invention a pour but d'éliminer ces inconvénients et d'offrir une boîte de plafond dont la fixation dans la plafond peut se faire très rapidement et aisément et avec laquelle également le raccordement des tubes renfermant les fils ne présente aucun problème et ceci indépendamment du genre et de l'épaisseur du plafond, donc aussi bien pour un plafond en béton plein que pour des constructions avec des hourdis creux ou des poutres en bois.

A cette fin, la boîte de plafond comporte un corps creux qui est ouvert sur au moins un côté, et un couvercle amovible qui s'adapte sur ce côté, tandis que le corps creux présente sur sa paroi latérale au moins deux bras faisant saillie latéralement vers l'extérieure, en étant situés en face l'un de l'autre, et qui retiennent le corps lors du montage dans un plafond, bras à travers lesquels s'étend au moins une découpe ou évidement débouchant sur le corps, pour l'introduction de conducteurs ou lignes électriques.

Lors du montage, par exemple dans un plafond en bois, la boîte peut être accrochée par ses bras à de petites lattes fixées à leur tour aux poutres. Lors du montage dans un plafond en béton, les bras forment en quelque sorte des crochets de retenue qui assurent une bonne fixation de la boîte. Avec des planchers en béton et par exemple aussi avec des voûtes en béton, il est possible également de monter la boîte de telle sorte qu'elle repose par ses bras sur la face supérieure du plafond. La partie supérieure de la boîte de plafond avec ses bras peut alors être enfoncée ou encastrée dans la mince couche de revêtement qui est appliquée sur la face supérieure du plafond. Il est en pratique toujours possible d'assurer que les bras se situent exactement au niveau des tubes avec des fils électriques, de telle sorte que ces tubes ne doivent pas ou peu être courbés au voisinage de la boîte de plafond. Le couvercle amovible qui est placé par définition sur le côté supérieur, permet dans dans la plupart des cas, lorsque les fils doivent être placés dans les tubes et connectés entre eux, d'accéder à partir du côté supérieur du plafond à l'intérieur de la boîte de plafond, ce qui facilite évidemment énormément la mise en place et la connexion des fils.

Dans une forme de réalisation particulière de l'invention, la boîte de plafond comporte quatre bras faisant saillie latéralement vers l'extérieur, qui sont mutuellement opposés par paire et qui sont dotés chacun d'au moins un évidement ou découpe pour une ligne électrique.

Dans une forme de réalisation particulière, chacun des bras est doté de deux évidements ou découpes distinctes, débouchant sur le corps pour une ligne électrique.

Utilement, les deux évidements présentent une section transversale ronde de diamètre différent.

Ceci permet de raccorder des tubes de différents diamètres à la boîte de plafond.

Dans une forme de réalisation utile de l'invention, le couvercle est doté d'une ouverture pour la fixation d'un organe de suspension.

A cet organe de suspension peut alors être accorché un apparail d'éclairage. Par définition, l'extrémité opposée au couvercle du creux creux doit alors aussi être ouverte.

Dans une forme de réalisation préférée, le corps creux présente à l'extrémité opposée au couvercle, un fond amovible. Suivant le cas d'utilisation, ce fond peut être mis en place et donc la boîte être totalement fermée, ou ce fond peut être retiré par exemple pour accrocher un appareil d'éclairage à un crochet fixé au couvercle.

Dans une forme de réalisation avantageuse de l'invention, le corps creux est ouvert à son extrémité éloignée du couvercle et à cette extrémité se raccorde une pièce de prolongement sous la forme d'un cylindre ouvert au moins sur le côté dirigé vers le corps creux et de façon à s'y adapter.

Dans cette forme de réalisation, la boîte peut toujours être adaptée à l'épaisseur du plafond, de telle sorte que, d'une part, il est toujours possible de situer les bras auxquels doivent se raccorder les tubes des lignes électriques, à la hauteur désirée et, d'autre part, situer cependant le côté inférieur de la boîte au voisinage de la face inférieure du plafond.

D'autres détails et particularités de l'invention ressortiront de la description ci-après, donnée à titre d'exemple non limitatif et en se référant aux dessins annexés dans lesquels :

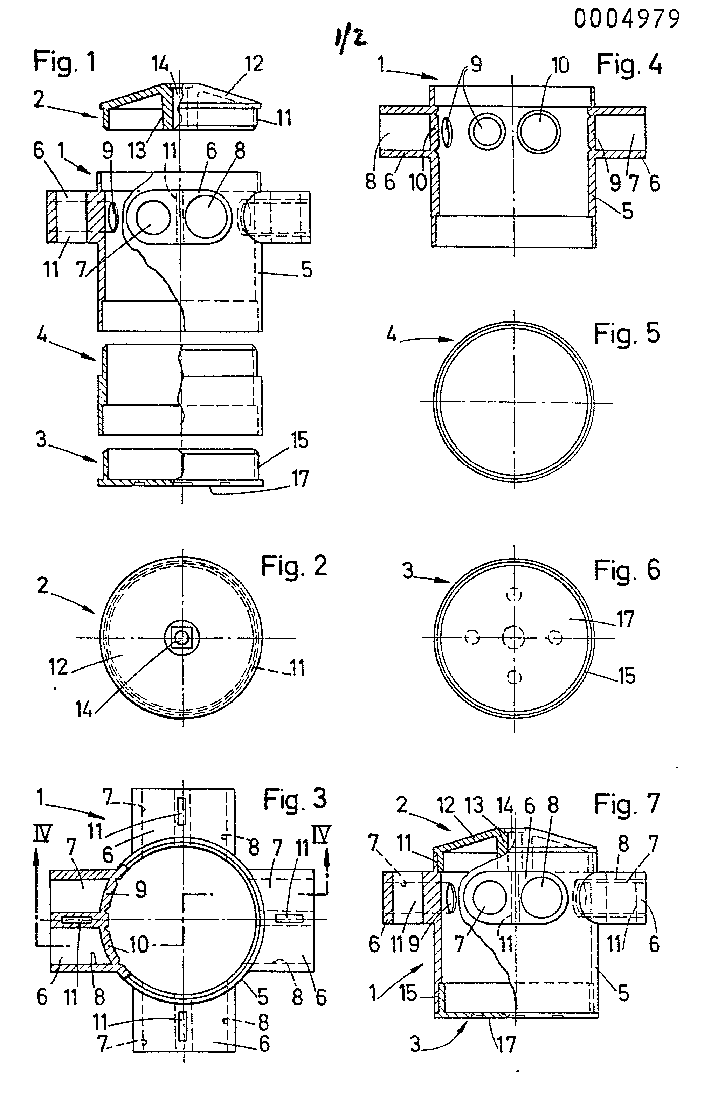

La figure 1 est une vue en coupe dans la moitié gauche et une vue en élévation dans la moitié droite d'une boîte de plafond suivant l'invention, à l'état démonté.

La figure 2 est une vue en plan de dessus du couvercle de la boîte de plafond de la figure 1.

La figure 3 est une vue en plan de dessus du corps creux de la boîte de plafond de la figure 1.

La figure 4 est une vue en coupe suivant la ligne IV-IV de la figure 1.

La figure 5 est une vue en plan de dessus de la pièce de prolongement de la boîte de plafond de la figure 1.

La figure 6 est une vue en plan de dessus du fond amovible de la boîte de plafond de la figure 1.

La figure 7 illustre la boîte de plafond de la figure 1, à présent assemblée et sans sa pièce de prolongement, la moitié de gauche étant une vue en coupe et celle de droite une vue en élévation.

La figure 8 est une vue en coupe transversale d'un plafond en béton dans lequel est montée une boîte de plafond suivant la figure 7.

La figure 9 est une vue en coupe transversale d'une voûte ou hourdis en béton dans lequel est incorporée une boîte de plafond suivant la figure 1.

La figure 10 est une vue en coupe transversale d'un plafond en bois, dans lequel une boîte de plafond suivant la figure 1 a été incorporée mais sans le fond amovible, la boîte étant munie d'un crochet de suspension.

La figure 11 est une vue en coupe suivant la ligne XI-XI de la figure 1.

Dans les diverses figures, des références identiques désignent des éléments analogues.

La boîte de plafond telle qu'illustrée aux figures comprend essentiellement un corps creux 1 ouvert à ses deux extrémité, un couvercle 2 pouvant être fixé de façon amovible à une extrémité de ce corps 1, un fond 3 pouvant être fixé de façon amovible à l'autre extrémité du corps creux, et une pièce de prolongement 4 utilisée ou non, qui peut être fixée de façon amovible sur la dernière extrémité précitée du corps creux 1.

Le corps creux 1 comprend une partie cylindrique ronde 5 et quatre bras 6 s'y rapportant en faisant saillie vers l'extérieur. Ces bras 6 sont situés à une même distance des extrémités de la partie 5 et font entre eux un angle de 90°. Chacun de ces bras 6 est doté de deux évidements ronds 7 et 8, qui sont situés côté à côte, donc à une même distance des extrémités de la partie 5, et s'étendent à travers ces bras suivant leur direction longitudinale, c'est-à-dire perpendiculairement à l'axe longitudinal de la partie 5. Les deux évidements 7 et 8 d'un bras 10 débouchant à l'intérieur du corps creux 1 possèdent des diamètres différents, à savoir des diamètres qui correspondent aux deux diamètres utilisés le plus couramment des tubes à travers lesquels on fait passer les conducteurs des lignes électriques. Ces tubes peuvent être enfilés par une extrémité dans l'un des évidements 7 et 8 d'un bras 6 et être reliés de la sorte très rapidement au corps creux 1.

Les évidements 7 et 8 sont encore fermés, de préférence à l'endroit de la partie cylindrique 5, par une partie 9 ou 10 pouvant être chassée sous pression et qui est reliée à cette partie 5 par une zone d'affaiblissement. Lorsqu'un évidement 7 et 8 n'est pas utilisé, cette partie 9 ou 10 obture l'évidement correspondant, de telle sorte que la poussière ou autre matière étrangère ne peut pénétrer dans la partie 5. Lorsque l'évidement 7 ou 8 est utilisé, on chasse alors par pression cette partie 9 ou 10.

Dans chaque bras 6 est encore pratiquée une ouverture 11 qui est située entre les deux évidements 7 et 8 et s'étend parallèlement à l'axe géométrique de la partie

cylindrique 5. Cette ouverture 11 peut être utilisée pour fixer en cas de besoin accessoirement le corps creux 1, par exemple à l'aide de clous, à une partie du plafond.

Le couvercle 2 est constitué par un collet cylindrique 11' et une partie en forme de capuchon 12 s'y raccordant. Le collet 11' s'adapte avec un certain effet de coincement dans une extrémité ouverte de la partie cylindrique 5 du corps creux 1 et en fait dans celle qui est la plus proche des bras 6. La partie en forme de capuchon 12 fait légèrement saillie au-delà du collet 11' et forme donc une butée qui se raccorde au bord extérieur de la partie 5 lorsque le couvercle 2 est glissé sur le corps 1. La partie en forme de capuchon 12 est dotée en son milieu d'un renforcement 13 que traverse une ouverture 14. A travers cette dernière peut être enfilé un boulon, un crochet ou autre moyen de fixation destiné à la suspension d'un appareil d'éclairage. Ce moyen de fixation est rendu solidaire du couvercle par exemple par une saillie ou un écrou et s'étend essentiellement dans le corps creux 1. Ce moyen de fixation peut être agencé aussi bien lors de la mise en plance de la boîte de plafond, qu'ultérieurement.

Le fond 3 est constitué par un collet cylindrique 15 et une plaque de fond 17 s'y raccordant. Tout comme dans le cas du couvercle 2, le collet 15 s'adapte avec un certain effet de coincement dans une extrémité ouverte de la partie 5 du corps creux 1 et en fait celle qui est la plus éloignée des bras 6. La plaque de fond 17 fait légèrement saillie au-delà du collet 15, de telle sorte que cette plaque se raccorde au bord extérieur de l'extrémité précitée du corps creux 1 lorsque le fond 3 est placé sur ce corps. Le fond 3 n'est placé sur le corps creux 1 que pendant la réalisation ou la finition du plafonnage, par exemple au cours de la coulée du béton alors que la boîte de plafond est encastrée et/ou pendant la mise en place du plafonnage. Ce fond 3 empêche la pénétration de la saleté et autres matières étrangères dans la boîte de plafond. Après finition complète du plafond, le fond 3 peut être retiré et jeté.

La boîte de plafond est encore complétée par une ou plusieurs pièces de prolongement 4, qui peuvent avoir une longueur différente. Chaque pièce de prolongement 4 est réalisée de telle sorte qu'une de ses extrémités s'adapte avec un certain effet de coincement dans l'extrémité de la partie 5 du corps creux 1 où s'adapte le couvercle 3, tandis que ce couvercle 3 s'adapte avec un effet de coincement dans l'autre extrémité de la pièce de prolongement 4. Lorsqu'on veut prolonger la boîte de plafond, on glisse alors une pièce de prolongement 4 par une extrémité dans le corps 1, après quoi on obture temporairement avec le couvercle 3 cette pièce de prolongement 4, sur le côté opposé au corps 1. Si l'on a besoin d'une longueur encore supérieure, on peut utiliser une seconde pièce de prolongement, celle-ci s'adaptant par nature dans une extrémité de la première pièce de prolongement 4 précitée éloignée du corps 1 et le couvercle 3 s'adapte alors aussi dans l'autre extrémité de cette dernière pièce de prolongement 4. De la sorte, il est toujours possible de donner à la boîte de plafond la hauteur désirée, de telle sorte que cette boîte possède alors une hauteur qui peut être égale à l'épaisseur du plafond, moins les revêtements de ce plafond.

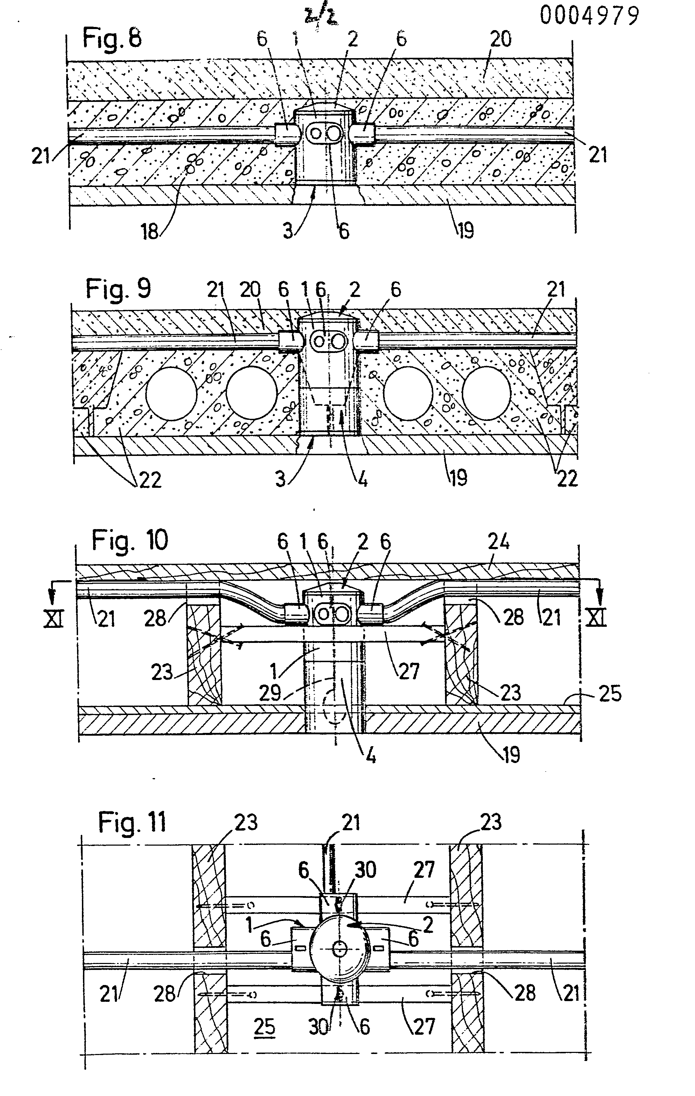

Aux figures 8 à 11, on a représenté des plafonds dans lesquels la boîte de plafond décrite précédemment est incorporée.

Le plafond illustré à la figure 8 est du type en béton et est constitué par une dalle de béton 18 qui est revêtue sur sa face inférieure par un plafonnage 19 et sur sa face supérieure par une couche de revêtement 20 dénommée sous-pavement ou chape. La boîte de plafond constituée par le corps creux 1, le couvercle 2 et le fond 3 est fixée avant la coulée de la dalle de béton 18 sur le coffrage. Avant de couler le béton, les différents tubes 21 pour les fils électriques des lignes sont mis en place et enfilés par leurs extrémités dans les évidements appropriés 7 ou 8 des bras 6. On déverse alors le béton qui ne peut pénétrer dans la boîte de plafond encastrée, étant donné que celle-ci constitue un caisson totalement fermé. Les tubes 21 peuvent s'étendre en ligne droite et ne doivent pas être pliés. La hauteur de la boîte de plafond est telle qu'elle est complètement noyée dans la dalle de béton. Après l'enlèvement du coffrage, le fond 3 est exposé et il se trouve exactement sur la face inférieure de cette dalle de béton 18. Lors de la mise en place du plafonnage 19 sur la face inférieure de la dalle de béton 18, on veille à ce que le fond 3 ne soit pas plafonné simultanément. Après la mise en place du plafonnage 19, on retire le fond 3, de telle sorte qu'on a accès à l'intérieur du corps creux 1 et qu'on peut donc mettre en place les fils électriques. A cause de la présence des bras 6, la boîte de plafond est fixée très solidement dans la dalle de béton 18.

Dans la forme de réalisation suivant la figure 9, le plafond est également fait de béton mais n'est pas constitué par une dalle de béton 18 mais au contraire par des hourdis en béton préfabriqués 22. Entre deux hourdis 22, on réalise une petite ouverture dans laquelle on suspend la boîte de plafond. Cette dernière s'appuie alors par ses quatre bras 6 sur le côté supérieur des hourdis 22. A l'aide d'une pièce de prolongement 4, on prolonge le corps creux 1 jusqu'à ce que l'extrémité de cette pièce de prolongement fermée par le fond 3 et donc l'ensemble de la boîte, se présente sur la face inférieure des hourdis 22. Sur le côté supérieur, le corps 1 est fermé par le couvercle 3, qui est alors situé complètement au-dessus des hourdis 22. On relie les tubes 21 aux bras 6, de telle sorte qu'ainsi les tubes 21 sont simplement posés sur les hourdis 22 et ne doivent pas être coudés. On introduit le câblage dans les tubes 21 et dans la boîte de plafond avant d'appliquer le revêtement ou chape 20 sur le côté supérieur des hourdis 22. En retirant temporairement le couvercle 2, on peut aisément atteindre l'intérieure de la boîte de plafond, de telle sorte qu'on peut agencer le câblage sur les hourdis. Après l'agencement du câblage, on replace le couvercle 22 qui est alors complètement incorporé lors de l'application du revêtement 20.

Dans la forme de réalisation suivant les figures 10 et 11, le plafond est du type en bois, constitué par des poutres 23 sur le côté supérieur desquelles un plancher formé par des planches 24 est fixé. Contre les autres côtés des poutres sont agencées des plaques en plâtre 25 ou analogues contre lesquelles est alors agencé un enduit ou revêtement 26. Avant de mettre en place le plancher 24 et les plaques 25, on agence la boîte de plafond et les tubes 21. Dans ce but, on fixe entre deux poutres 23, deux petites lattes 27 entre lesquelles s'adapte exactement la partie 5 du corps creux 1. On situe la boîte de plafond entre ces petites lattes de telle sorte qu'elle repose sur celles-ci par deux bras 6. On place les lattes 27 de telle sorte que le couvercle 2 se situe encore exactement en dessous du bord supérieur des poutres 23 et ne gêne donc pas la mise en place ultérieure du planche 24. On dote les poutres 23 des évidements 28 nécessaires pour les tubes 21, qui peuvent donc être raccordés avec une très faible courbure aux évidements 7 ou 8 des bras 6. Dans ce cas également, on peut mettre en place le câblage à partir du côté supérieur du plafond. En retirant temporairement le couvercle 2, on peut toujours atteindre l'intérieur de la boîte de plafond à partir de ce côté supérieur. Etant donné qu'on ne fait aucun usage d'un plafonnage ou de béton, le fond 3 n'est pas nécessaire. A la place de celui-ci, on utilise une pièce de prolongement 4 que l'on raccorde au corps 1 et qui s'étend jusqu'un peu en dessous de la face inférieure de la poutre 23. Avant ou après la mise en place du câblage, on fixe encore un crochet au couvercle 2. L'extrémité recourbée de ce crochet 29 se trouve alors dans le côté inférieur de la boîte de plafond. La fixation au couvercle 2 a lieu par exemple au moyen d'un écrou qui est vissé à l'autre extrémité, sur le côté supérieur de la boîte de plafond, sur le crochet 29. Bien que la boîte de plafond soit accrochée fermement entre les petites lattes 27, on peut si on le désire encore prévoir une fixation supplémentaire. On peut en effet enfoncer un petit clou 30 à travers les ouvertures 11 dans les deux bras 6 qui reposent sur une petite latte 27. De la sorte, tout glissement de la boîte de plafond est donc rendu impossible.

La boîte de plafond encastrée décrite précédemment peut être utilisée à volonté avec différents types de plafonds. La mise en place et la retenue en position de cette boîte de plafond encastrée sont très simples. Suivant le cas, on peut atteindre l'intérieur de la boîte de plafond en retirant le fond 3 ou le couvercle 2. En adaptant des pièces de prolongement 4, on peut toujours assurer qu'aussi bien le côté supérieur que le côté inférieur de la boîte de plafond soient situés à la hauteur désirée par rapport à ce plafond et on peut veiller à ce que les tubes 21 ne doivent que peu ou pas être courbés pour les fixer à la boîte de plafond.

La boîte de plafond est avantageusement faite de matière synthétique. Les pièces de prolongement 4 peuvent être vendues conjointement avec le corps 1 ou séparément.

Il doit être entendu que la présente invention n'est en aucune façon limitée aux formes de réalisation ci-avant et que bien des modifications peuvent y être apportées sans sortir du cadre du présent brevet.

REVENDICATIONS

1. Boîte de plafond, en particulier pour la connexion d'un point lumineux, cette boîte comportant un corps creux, caractérisée en ce que le corps creux précité présente au moins un côté ouvert et un couvercle amovible s'adaptant à ce côté, tandis qu'il comprend sur sa paroi latérale au moins deux bras latéraux faisant saillie vers l'extérieur, qui sont situés en face l'un de l'autre et maintiennent le corps lors de son encastrement ou incorporation dans un plafond, bras à travers lesquels s'étend au moins un évidement débouchant dans le corps pour la mise en place de lignes électriques.

2. Boîte de plafond suivant la revendication 1, caractérisée en ce qu'elle comprend quatre bras faisant saillie latéralement vers l'extérieur, opposés par paire et dotés chacun d'au moins un évidement pour une ligne électrique.

3. Boîte de plafond suivant l'une ou l'autre des revendications 1 et 2, caractérisée en ce que chacun des bras est doté de deux évidements distincts, débouchant dans le corps, pour une ligne électrique.

4. Boîte de plafond suivant la revendication 3, caractérisée en ce que les deux évidements présentent une section transversale ronde de diamètre différent.

5. Boîte de plafond suivant l'une ou l'autre des revendications 3 et 4, caractérisée en ce que les deux évidements dans chaque bras en saillie sont situés approximativement à la même distance des extrémités du corps creux et chaque bras en saillie est doté d'une ouverture supplémentaire qui s'étend transversalement à travers le bras entre les deux évidements précités, ouverture à travers laquelle on peut agencer un élément de fixation.

6. Boîte de plafond suivant l'une quelconque des revendications précédentes, caractérisée en ce que le couvercle est doté d'une ouverture pour la fixation d'un organe de suspension.

7. Boîte de plafond suivant l'une quelconque des revendications précédentes, caractérisée en ce qu'au couvercle est fixé un organe de suspension, s'étendant à l'intérieur du corps creux, pour un appareil d'éclairage.

8. Boîte de plafond suivant l'une quelconque des revendications précédentes, caractérisée en ce que le couvercle comporte une partie en forme de capuchon et un collet qui s'adapte dans le corps creux.

9. Boîte de plafond suivant l'une quelconque des revendications précédentes, caractérisée en ce que le corps creux comporte à son extrémité opposée au couvercle, un fond amovible.

10. Boîte de plafond suivant l'une quelconque des revendications précédentes, caractérisée en ce que le corps creux est ouvert à son extrémité opposée au couvercle et à cette extrémité se raccorde une pièce de prolongement sous la forme d'un cylindre ouvert au moins sur son côté dirigé vers le corps creux.

11. Boîte de plafond suivant l'une quelconque des revendications précédentes, caractérisée en ce que le corps creux est cylindrique.

12. Boîte de plafond suivant l'une quelconque des revendications précédentes, caractérisée en ce qu'elle est faite de matière synthétique.

13. Boîte de plafond suivant l'une quelconque des revendications précédentes, caractérisée en ce que les extrémités situées du côté du corps creux des évidements débouchant dans celui-ci, lorsqu'aucune ligne électrique ne traverse ces évidements, sont fermées par une petite cloison qui se raccorde par des zones d'affaiblissement au reste du corps creux et peut donc être chassée par pression lorsque ceci est nécessaire.

Fig. 1
Fig. 2
Fig. 3
Fig. 4
Fig. 5
Fig. 6
Fig. 7

1/2

0004979

Fig. 8

Fig. 9

Fig. 10

Fig. 11